# EUROPEAN PATENT APPLICATION

(11) **EP 4 521 695 A1**
(43) Date of publication of application: **12.03.2025**
(21) Application number: 24195905.5
(22) Date of filing: 22.08.2024
(51) Int. Cl.: H04L 41/0631, H04L 41/14, H04L 43/50

(54) **METHOD AND APPARATUS FOR NETWORK DIGITAL TWIN-BASED FAULT INJECTION ANALYSIS**

(30) Priority: 07.09.2023 FI 20235999
(71) Applicant: Nokia Solutions and Networks Oy, 02610 Espoo (FI)
(72) Inventor: ALI-TOLPPA, Janne, Pirkkala (FI); BEGA, Dario, Munich (DE); KAJÓ, Márton, Munich (DE); MWANJE, Stephen, Dorfen (DE)
(74) Representative: Nokia EPO representatives

(57) **Abstract**

Described herein is a network node, a network system, a computer readable medium and a method for supporting detection and/or diagnosis of network anomalies in a target communication network. The network node is configured to support detection and/or diagnosis of network anomalies in a target communication network based on a Network Digital Twin, NDT, simulating at least a part of the target communication network, wherein the first network node comprises at least one processor; and at least one memory storing instructions that, when executed by the at least one processor, cause the first network node at least to: provide, to a second network node, at least one anomaly injection case generated based on a simulation configuration and/or configure at least one anomaly injection case in the NDT, the NDT being provided at the second network node; receive, from the second network node, a simulation signature and/or anomaly diagnosis of a simulation of the anomaly injection case on the NDT; and deploy diagnosis knowledge, generated based on the received simulation signature and/or anomaly diagnosis, in a Network Anomaly Detection Function, NADF, for the target communication network and/or provide the anomaly diagnosis to the target communication network.

## Description

### TECHNOLOGY

The present disclosure relates to a method and an apparatus for network digital fault injection analysis, in particular to network digital twin-based fault injection analysis.

### BACKGROUND

Any discussion of the background art throughout the specification should in no way be considered as an admission that such art is widely known or forms part of common general knowledge in the field.

Network anomaly detection and diagnosis can be a powerful tool, but common approaches have significant challenges. First, anomalies are, by definition, rare events and so building a comprehensive diagnosis knowledgebase is time-consuming and requires the involvement of network experts for classification and analysis of new discovered anomaly events. Second, an anomaly is not necessarily a fault, or any other relevant event in the network. Many detected anomalies may not be relevant for network operation or management, but rather just something unusual. For example, a football match may lead to an anomalous peak load, but if not leading to congestion, does not need to be notified to the operator. The analysis of irrelevant anomalies is costly and deflates the value of anomaly detection. Third, a desirable network anomaly detection system would also be able to detect unforeseen anomalies. Building a network anomaly detection system by leveraging supervised techniques, i.e., involving labelled anomaly detection training dataset is contrary to this goal, since it requires many samples of known and diverse anomalies.

One way of analyzing the network is using fault injections. Fault injection is the act of purposefully disturbing the functioning of network components by introducing misconfigurations, simulating failures or other changes in the expected behavior. Knowing the injected root cause, the network behavior can be monitored and measured and from these measurements the faults can be fingerprinted for later detection and diagnosis. However, it has also downsides that limit its usability in mobile networks:

In particular, common fault injection is typically not feasible on operational (live) networks, where network QoS cannot be compromised. Moreover, fault injection, in isolated test cases (such as a single network element in a lab) do not produce the wide-reaching effects of a network element fault in a real large-scale network deployment. These isolated injections also might not produce patterns that can be used for anomaly detection and diagnosis in live deployments. Network simulators may be used to simulate the impact of injected faults. However, since faults are usually very specific to a certain network deployment and its environment, simulated anomaly patterns are typically not transferable to real network anomaly detection.

To mitigate the above-mentioned problems in network anomaly detection, a number of solutions have been proposed. The Network Diagnosis Cloud concept proposes to use transfer learning to transfer network anomaly event diagnosis knowledge between networks or deployments to speed up the diagnosis knowledgebase collection. Such transfers are not straightforward, though, since each network deployment is different and the same anomaly pattern and diagnosis may not be applicable in different networks. Transfer between networks is nothing trivial and already limiting the data available for diagnosis.

Another alternative is to use active learning to reduce the manual diagnosis effort. In this solution, the diagnosed and undiagnosed anomaly patterns in the diagnosis knowledge base are clustered to find the undiagnosed anomaly pattern samples to be diagnosed by the operator, which are the most beneficial for future automatic diagnoses. However, it cannot determine if the raised anomaly patterns are actually relevant for the network operation or not. Furthermore, this approach has the risk of erroneously clustering anomalies with different root causes together, which can lead to diagnosis errors.

To summarize, anomalies of a communication network are rare events and the conventional anomaly detection is time-consuming, requiring the involvement of network experts and not 100% accurate. Hence, there is a need to develop an accurate and efficient way of anomaly detection and diagnosis.

### SUMMARY

The scope of protection sought for various example embodiments of the disclosure is set out by the independent claims. The example embodiments and features, if any, described in this specification that do not fall under the scope of the independent claims are to be interpreted as examples useful for understanding various example embodiments of the disclosure.

A network node mentioned in the present disclosure may be a network element. A network element, such as communication elements, may be a terminal device, control elements or functions, such as access network elements, like a base station / BS, a gNB, a radio network controller, a core network control element or function, such as a gateway element, or other network elements or functions, as described herein, a UE, and any other elements, functions or applications may be implemented by software, e.g., by a computer program product for a computer, and/or by hardware. For executing their respective processing, correspondingly used devices, nodes, functions or network elements may include several means, modules, units, components, etc. (not shown) which are required for control, processing and/or communication/signaling functionality.

In accordance with the present disclosure, there may be provided a first network node, configured to support detection and/or diagnosis of network anomalies in a target communication network based on a Network Digital Twin, NDT, simulating at least a part of the target communication network, wherein the first network node comprises:
at least one processor; and
at least one memory storing instructions that, when executed by the at least one processor, cause the first network node at least to:
   provide, to a second network node, at least one anomaly injection case generated based on a simulation configuration and/or configure at least one anomaly injection case in the NDT, the NDT being provided at the second network node;
   receive, from the second network node, a simulation signature and/or anomaly diagnosis of a simulation of the anomaly injection case on the NDT; and
   deploy diagnosis knowledge, generated based on the received simulation signature and/or anomaly diagnosis, in a Network Anomaly Detection Function, NADF, for the target communication network and/or provide the anomaly diagnosis to the target communication network.

In some examples, the anomaly injection cases are fault injection cases indicative of network fault conditions and wherein providing an anomaly injection case to the second network node includes injecting a fault of the set of fault injection cases into the NDT to simulate the impact of said fault.

In some examples, the first network node is initialized by an Operations, Administration and Maintenance, OAM, entity for improving the detection and diagnosis capabilities of the NADF, the first network node is further caused to:
inject one or more diagnosed root causes of an anomaly into the NDT to simulate the impact of said root cause, wherein a root cause is the best fitting cause leading to the anomaly signature of a selected event; and
compare diagnosed anomaly signatures of the NADF with the received simulation signatures to calibrate the received simulation signatures provided by the second network node.

In some examples, the anomaly injection cases are fault injection cases indicative of network fault conditions and wherein providing at least one anomaly injection case includes injecting a fault of the set of fault injection cases into the NDT to simulate the impact of said fault, and the first network node is further caused to:
obtain a first simulation signature for each of the at least one anomaly injection case;
obtain a first signature of a root cause for each of the at least one diagnosed root cause of an anomaly in the target communication network;
inject at least one diagnosed root cause of an anomaly into the NDT to simulate the impact of said root cause, and obtain a second simulation signature for each of the at least one diagnosed root cause of an anomaly;
compare the first signature of the root cause and the second simulation signature to calibrate the first simulation signature provided by the second network node.

In some examples, the anomaly injection cases are fault injection cases indicative of network fault conditions and wherein after configuring at least one anomaly injection case in the NDT provided at the second network node, the first network node is further caused to:
obtain a first simulation signature for each of the at least one anomaly injection case;
obtain a first signature of a root cause for each of the at least one diagnosed root cause of an anomaly in the target communication network;
inject at least one diagnosed root cause of an anomaly into the NDT to simulate the impact of said root cause, and obtain a second simulation signature for each of the at least one diagnosed root cause of an anomaly;
obtain a third simulation signature for each of the at least one diagnosed root cause of an anomaly in the target communication network.
compare the first signature of the root cause and the second simulation signature to calibrate the first simulation signature provided by the second network node.

In some examples, deploying the diagnosis knowledge includes deploying the received simulation signature of each of the at least one anomaly injection case in the NADF for use in the target communication network.

In some examples, deploying the diagnosis knowledge in the NADF and/or providing the anomaly diagnosis to the target communication network to trigger one or more self-healing actions of the target communication network includes:
based on the received simulation signature, train a supervised classification machine learning model in the first network node and provide the trained classification machine learning model to the NADF for anomaly detection in the target communication network; or
report the received simulation signature to the NADF for training a supervised classification machine learning model of the NADF based on the received simulation signature.

In some examples, the first network node is further caused to read a simulation configuration from the second network node and generate one or more fault injection cases based on the simulation configuration.

In some examples, the first network node is further caused to configure the fault injection in the second network node, wherein at the first network node, failures are preselected for recreating a particular anomalous measurement set or patterns; and
wherein the first network node is further caused to request fault diagnosis including a report from the second network node for fault diagnosis;
receive the requested report including at least one of a performed fault diagnosis, a list of measurements and simulated signatures of at least one of the injected anomalies from the second network node; and
compare diagnosed anomaly signatures of the NADF with the received fault diagnosis and/or simulation signatures to calibrate the diagnosis provided by the second network node.

In some examples, the first network node is further caused to provide, in particular directly, the fault diagnosis to the target communication network to trigger self-healing actions of the real communication network, wherein the first network node is further caused to store the fault diagnosis in the diagnosis knowledgebase for anomaly event diagnosis.

In some examples, the anomaly includes at least one of a communication network failure, a communication network parameter deviation, a disturbed functioning of one or more network components, a list of pre-determined fault scenarios, heuristic and/or random exploration of the network and simulation configurations of the NDT simulation.

In some examples, the first network node is an operations, administration and maintenance, OAM, entity and the second network node is a base station or a core network entity or a network management entity; and/or
wherein the first network node is a network anomaly detection function network digital twin management service consumer, NADF NDT MnS Consumer, and the second network node is a network digital twin management service producer, NADF NDT MnS Consumer.

In some examples, the received simulated signature is simulated in the NDT at the second network node.

In some examples, the NDT is a representation of at least a part of the target network which is a real-world network including one or more of the following: a subnetwork, a geographical area, a single cell, a group of cells, selected features that are synchronized between the target communication network and the NDT, a simulation model of the communication network along with its operating environment and/or the application traffic that it carries.

In accordance with a second aspect of the present disclosure, there is provided a second network node, configured to support detection and/or diagnosis of network anomalies in a target communication network based on a Network Digital Twin, NDT, simulating at least a part of the target communication network, wherein the second network node comprises:
at least one processor; and
at least one memory storing instructions that, when executed by the at least one processor, cause the first network node at least to:
   provide a configuration for generating an anomaly injection case to the first network node and/or receive, from a first network node, at least one anomaly injection case generated based on a simulation configuration; and
   simulate the impact of an injected anomaly of the set of anomaly injection cases on the NDT; and
   report to the first network node, a simulation signature and/or anomaly diagnosis of the simulation of the anomaly injection case on the NDT.

In some examples, the anomaly injection cases are fault injection cases indicative of network fault conditions and wherein the first and/or second network node is caused to inject a fault of the set of fault injection cases into the NDT to simulate the impact of said fault, the NDT being provided at the second network node.

In some examples, the second network node is further caused to:
receive one or more diagnosed root causes of an anomaly and simulate the impact of said one or more root causes on the NDT, wherein a root cause is the best fitting cause leading to the anomaly signature of a selected event; and
report at least the simulated signature indicative of the impact of said root cause to the first network node for calibration.

In some examples, the anomaly injection cases are fault injection cases indicative of network fault conditions and the second network node is further caused to:
based on a fault of the at least one anomaly injection case injected by the first or second network node, simulate the impact of said fault on the NDT to obtain a first simulation signature;
based on at least one diagnosed root cause of an anomaly, simulate the impact of said at least one root cause on the NDT, to obtain a second simulation signature; and
report the first simulation signature and the second simulation signature to the first network node for calibration.

In some examples, the second network node is further configured to simulate the injected failures and provide a diagnosis of potential root causes to perform fault diagnosis, wherein the fault diagnosis is provided for a past fault or an ongoing fault, wherein the second network node is further configured to trigger data collection from the target network to support the ongoing diagnosis.

In some examples, the second network node is further caused to provide a simulation configuration to the first network node, based on which the first network node generates the set of fault injection cases.

In some examples, the second network node is further caused to receive, the simulation configuration of the at least one anomaly injection case from the first network node, and generate, the at least one anomaly injection case.

In some examples, the second network node is further caused to trigger data reception from the target communication network to further support the diagnosis.

In accordance with a third aspect of the present disclosure, there is provided a network system with an administration and maintenance, OAM, entity, a Network Digital Twin, NDT, a first network node and a second network node, wherein, the first network node is in accordance with the first aspect of the present disclosure and the second network node is configured in accordance with the second aspect of the present disclosure and the NADF is deployed using data received by the OAM and the OAM is configures to initialize the first network node and/or the second network node.

In accordance with a fourth aspect of the present disclosure, there is provided a method for supporting detection and/or diagnosis of network anomalies in a target communication network based on a Network Digital Twin, NDT, simulating at least a part of the target communication network, wherein the method comprises:
providing, to a second network node, at least one anomaly injection case generated based on a simulation configuration and/or configuring at least one anomaly injection case in the NDT, the NDT being provided at the second network node;
receiving, from the second network node, a simulation signature and/or anomaly diagnosis of a simulation of the anomaly injection case on the NDT; and
deploying diagnosis knowledge, generated based on the received simulation signature and/or anomaly diagnosis, in a Network Anomaly Detection Function, NADF, for the target communication network and/or providing the anomaly diagnosis to the target communication network to trigger one or more self-healing actions of the target communication network.

In accordance with a fifth aspect of the present disclosure, there is provided a method for supporting detection and/or diagnosis of network anomalies in a target communication network based on a Network Digital Twin, NDT, simulating at least a part of the target communication network, wherein the method comprises:
providing a configuration for generating an anomaly injection case to a first network node and/or receiving, from a first network node, at least one anomaly injection case generated based on a simulation configuration; and
simulating the impact of an injected anomaly of the set of anomaly injection cases on the NDT; and
reporting to the first network node, a simulation signature and/or anomaly diagnosis of the simulation of the anomaly injection case on the NDT.

In accordance with a sixth aspect of the present disclosure, there is provided a computer readable medium storing instructions thereon, the instructions, when executed by at least one processing unit of a machine, causing the machine to perform the method according to the fourth or the fifth aspect of the present disclosure.

In addition, according to some other example embodiments, there is provided, for example, a computer program product for a wireless communication device comprising at least one processor, including software code portions for performing the respective steps disclosed in the present disclosure, when said product is run on the device. The computer program product may include a computer-readable medium on which said software code portions are stored. Furthermore, the computer program product may be directly loadable into the internal memory of the computer and/or transmittable via a network by means of at least one of upload, download and push procedures.

While some example embodiments will be described herein with particular reference to the above application, it will be appreciated that the present disclosure is not limited to such a field of use, and is applicable in broader contexts.

Notably, it is understood that methods according to the present disclosure relate to methods of operating the apparatuses according to the above example embodiments and variations thereof, and that respective statements made with regard to the apparatuses likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

Other and further example embodiments of the present disclosure will become apparent during the course of the following discussion and by reference to the accompanying drawings.

### BRIEF DESCRIPTION OF THE DRAWINGS

Example embodiments of the disclosure will now be described, by way of example only, with reference to the accompanying drawings in which:
Figure 1 schematically illustrates an overview of typical network anomaly detection and diagnosis solution;
Figure 2 schematically illustrates anomaly-level calculation and anomaly pattern;
Figure 3 schematically illustrates active learning based augmented anomaly diagnosis;
Figure 4 schematically illustrates an overview of an example implementation of network digital twin-based fault injection analysis of the present disclosure;
Figure 5 schematically illustrates the first example implementation of network digital twin-based fault injection analysis of the present disclosure;
Figure 6 schematically illustrates the second example implementation of network digital twin-based fault injection analysis of the present disclosure;
Figure 7 schematically illustrates the third example implementation of network digital twin-based fault injection analysis of the present disclosure.

### DESCRIPTION OF EXAMPLE EMBODIMENTS

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however. It is apparent for a person skilled in the art that the embodiments may also be applied to other kinds of communication networks where mobile communication principles are integrated with a D2D (device-to-device) or V2X (vehicle to everything) configuration, such as SL (side link), e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules, etc., that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed unit (DU) or a centralized/central unit (CU), which controls a respective coverage area or cell(s) and with which one or more communication stations such as communication elements or functions, like user devices or terminal devices, like a user equipment (UE), or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application on capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The following description may provide further details of alternatives, modifications and variances: a gNB comprises e.g., a node providing NR user plane and control plane protocol terminations towards the UE, and connected via the NG interface to the 5GC, e.g., according to 3GPP TS 38.300 V16.6.0 (2021-06) section 3.2 incorporated by reference.

A gNB Central Unit (gNB-CU) comprises e.g., a logical node hosting e.g., RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB Distributed Unit (gNB-DU) comprises e.g., a logical node hosting e.g., RLC, MAC and PHY layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU.

A gNB-CU-Control Plane (gNB-CU-CP) comprises e.g., a logical node hosting e.g., the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

A gNB-CU-User Plane (gNB-CU-UP) comprises e.g., a logical node hosting e.g., the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g., according to 3GPP TS 38.401 V16.6.0 (2021-07) section 3.1 incorporated by reference.

Different functional splits between the central and distributed unit are possible, e.g., called options:
Option 1 (1A-like split):
   - The function split in this option is similar to the 1A architecture in DC. RRC is in the central unit. PDCP, RLC, MAC, physical layer and RF are in the distributed unit.
Option 2 (3C-like split):
   - The function split in this option is similar to the 3C architecture in DC. RRC and PDCP are in the central unit. RLC, MAC, physical layer and RF are in the distributed unit.
Option 3 (intra RLC split):
   - Low RLC (partial function of RLC), MAC, physical layer and RF are in the distributed unit. PDCP and high RLC (the other partial function of RLC) are in the central unit.
Option 4 (RLC-MAC split):
   - MAC, physical layer and RF are in the distributed unit. PDCP and RLC are in the central unit.
Or else, e.g., according to 3GPP TR 38.801 V14.0.0 (2017-03) section 11 incorporated by reference.

A gNB supports different protocol layers, e.g., Layer 1 (L1) - physical layer.

The layer 2 (L2) of NR is split into the following sublayers: Medium Access Control (MAC), Radio Link Control (RLC), Packet Data Convergence Protocol (PDCP) and Service Data Adaptation Protocol (SDAP), where e.g.:
- The physical layer offers to the MAC sublayer transport channels;
- The MAC sublayer offers to the RLC sublayer logical channels;
- The RLC sublayer offers to the PDCP sublayer RLC channels;
- The PDCP sublayer offers to the SDAP sublayer radio bearers;
- The SDAP sublayer offers to 5GC QoS flows;
- Comp. refers to header compression and Segm. To segmentation;
- Control channels include (BCCH, PCCH).

Layer 3 (L3) includes e.g., Radio Resource Control (RRC), e.g., according to 3GPP TS 38.300 V16.6.0 (2021-06) section 6 incorporated by reference.

A RAN (Radio Access Network) node or network node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-)layer of a RAN (Radio Access Network), e.g. layer 2 and/or layer 3.

The gNB CU and gNB DU parts may e.g., be co-located or physically separated. The gNB DU may even be split further, e.g., into two parts, e.g., one including processing equipment and one including an antenna. A Central Unit (CU) may also be called BBU/REC/RCC/C-RAN/V-RAN, O-RAN, or part thereof. A Distributed Unit (DU) may also be called RRH/RRU/RE/RU, or part thereof. Hereinafter, in various example embodiments of the present disclosure, the CU-CP (or more generically, the CU) may also be referred to as a (first) network node that supports at least one of central unit control plane functionality or a layer 3 protocol of a radio access network; and similarly, the DU may be referred to as a (second) network node that supports at least one of distributed unit functionality or the layer 2 protocol of the radio access network.

A gNB-DU supports one or multiple cells, and could thus serve as e.g., a serving cell for a user equipment (UE).

A user equipment (UE) may include a wireless or mobile device, an apparatus with a radio interface to interact with a RAN (Radio Access Network), a smartphone, an in-vehicle apparatus, an IoT device, a M2M device, or else. Such UE or apparatus may comprise: at least one processor; and at least one memory including computer program code; wherein the at least one memory and the computer program code are configured to, with the at least one processor, cause the apparatus at least to perform certain operations, like e.g. RRC connection to the RAN. A UE is e.g., configured to generate a message (e.g., including a cell ID) to be transmitted via radio towards a RAN (e.g., to reach and communicate with a serving cell). A UE may generate and transmit and receive RRC messages containing one or more RRC PDUs (Packet Data Units).

The UE may have different states (e.g., according to 3GPP TS 38.331 V16.5.0 (2021-06) sections 42.1 and 4.4, incorporated by reference).

A UE is e.g., either in RRC_CONNECTED state or in RRC_INACTIVE state when an RRC connection has been established.

In RRC_CONNECTED state a UE may:
- store the AS context;
- transfer unicast data to/from the UE;
- monitor control channels associated with the shared data channel to determine if data is scheduled for the data channel;
- provide channel quality and feedback information;
- perform neighbouring cell measurements and measurement reporting.

The RRC protocol includes e.g. the following main functions:
- RRC connection control;
- measurement configuration and reporting;
- establishment/modification/release of measurement configuration (e.g. intra-frequency, inter-frequency and inter-RAT measurements);
- setup and release of measurement gaps;
- measurement reporting.

The general functions and interconnections of the described elements and functions, which also depend on the actual network type, are known to those skilled in the art and described in corresponding specifications, so that a detailed description thereof may omitted herein for the sake of conciseness. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station / BS, a gNB, a radio network controller, a core network control element or function, such as a gateway element, or other network elements or functions, as described herein, and any other elements, functions or applications may be implemented by software, e.g., by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors. It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

Now, before going into detail about the example embodiments of the present disclosure, it may still be worthwhile to briefly go through some exemplary general aspects of machine learning aspects, and more particularly AI (artificial intelligence) and/or ML (machine learning) related techniques/procedures that may be considered useful for understanding the present disclosure.

ML frameworks and techniques are being increasingly deployed across the 5G networks (including for example RAN, core network, as well as management system/functionality) and it is expected to scale up as the technology further grows, e.g., to 5G advanced networks, 6G networks, or the like. In addition, there is also general interest from the telecommunication community in different standards forums to study and standardize different ML frameworks and functionalities and to leverage the capability of ML to improve the use cases of respective standard bodies and different working groups within them. For example, 3GPP has also been actively involved in studying different aspects of ML capabilities and its applicability in different working groups. To name a few:
- SA (Service and System Aspects) 5 deals with the WI (Work Item) on the PM (Performance Management) and KPI (Key Performance Indicator) enhancements for 5G and advanced systems, generally focusing on specifying the required PMs and KPIs for measuring the performance of different network entities.
- The study on SA5 generally focuses on the management aspects of training, retraining, testing and inference making.
- 3GPP SA2 generally deals with some of the advanced topics on ML such as enhancements in trained ML model sharing, support of FL (Federated Learning) in 5C core.

In addition, the RAN3 study item on enhancements of data collection for NR and EN-DC has described the functional framework for RAN Intelligence. Since this functional framework is considered to be readily understandable by the skilled person, detailed descriptions thereof are thus omitted for the sake of conciseness. In a broad sense, the framework generally proposes two options for ML model training and deployment. The first option is to train the ML model at RAN and deploy the same model for inference in the RAN itself. The second option is to train the ML model at OAM and deploy the model for inference at RAN. In either of these options, the inference is happening at the RAN. Thereafter, SA5 performed a study to understand the implications of the RAN3 study described above to SA5.

Network entities across RAN and core are adopting AI/ML framework, also in the standards. Generally speaking, each network entity may train, retrain, and/or deploy multiple ML models for inference. It may also be considered as equally important to analyze the feasibility of the framework by providing appropriate aiding information to understand and improve the efficiency of AI/ML usage in different AI/ML-enabled network entities.

Towards 5G-Advanced and 6G, it may be anticipated that a lot of RAN, core and management use cases may be driven by AI/ML-based analytics. Therefore, a significantly large number of AI/ML models may be trained and/or deployed for inference directly in network entities, such as UEs, base stations (e.g., gNodeBs), core network functions and/or management functions.

As illustrated above, the present disclosure generally seeks to provide an accurate and efficient way of anomaly detection and diagnosis.

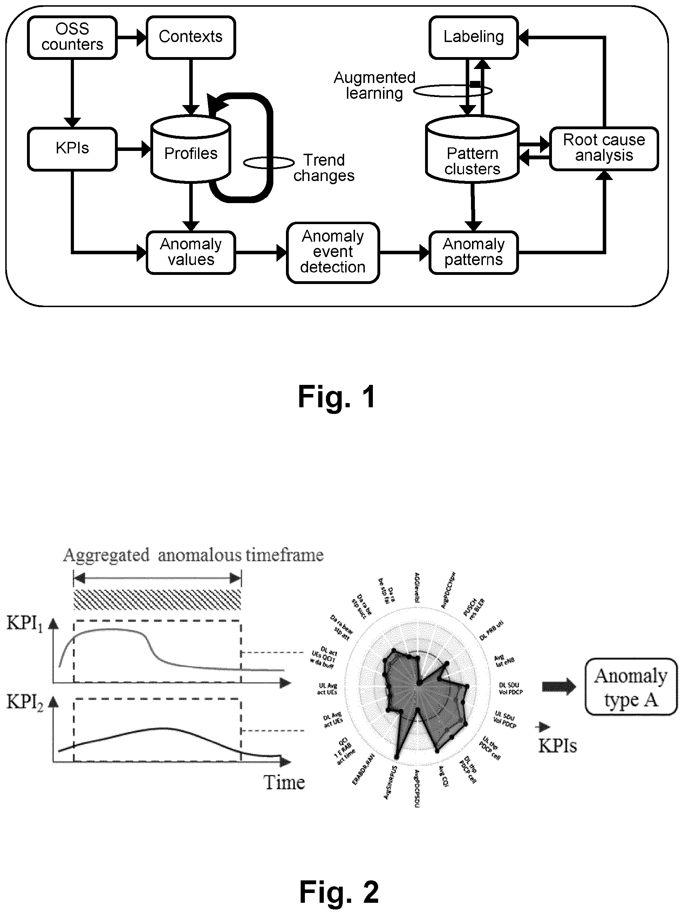

A classical network anomaly detection and diagnosis solution is show in Figure 1. It may incorporate three main phases: first, the profiling of typical network states in predefined contexts mostly leveraging clustering and unsupervised learning techniques; second, anomaly event detection by comparing the network states against the profiles; and third, the diagnosis of the anomaly event to get more insights about the type of anomaly (description of the detected anomaly event as anomaly pattern), the root cause and eventually how to react. A root cause may be defined as the best fitting set of causes that lead to that anomaly or anomaly pattern. The state profiling may be done based on selected network Key Performance Indicators (KPIs) in each context. The contexts may include, for example, different hours of the day to capture diurnal patterns, daily fluctuation or possibly distinguishing between business days and holidays.

The diagnosis may be automated by using case-based reasoning and comparing the detected anomaly event pattern against the anomaly diagnosis knowledgebase finding the most similar already diagnosed anomaly. In case no close match is obtained, a manual diagnosis is required.

To be more specific, Figure 1 shows an overview of anomaly detection and diagnosis function for Radio Access Networks (RANs). Profiling, detection and diagnosis are done per selected contexts, for example per cell and distinguishing between workdays and weekends. The intended deployment resides on NM-level and analyses Performance Management (PM) data collected from a Network Management System (NMS). The collected Key Performance Indicators (KPIs) are typically aggregated with minutely or hourly granularity. Note that the concept allows also other deployment options.

Once the profiles are created, an anomaly level is calculated for each KPI in each cell against the profiles for the collected time series samples. Based on the anomaly levels, distinct anomaly events are detected. An anomaly event only indicates that something unusual has occurred, but not necessarily a network performance degradation or other event that would require corrective actions. Therefore, the detected anomaly events are analysed by a diagnosis function, which connects the detected anomalies to the most like root cause(s). Once the causes of the anomaly are known, they may be connected to corrective workflows.

The detected anomaly events are described for diagnosis with an anomaly pattern, wherein an anomaly pattern may be also called anomaly signature. The anomaly pattern can consist of the features (KPIs) used in the detection phase, but typically it is an extension of these. As a medical analogy, fever is a good indicator of an illness, but for a diagnosing which illness it is, more information is required. The averaged anomaly levels of an extended set of network KPIs are used. The anomaly pattern should capture as many aspects of the anomaly event as possible.

The observed anomaly pattern is compared against the already analysed and labelled anomalies stored in the diagnosis knowledgebase. The closest matching labelled anomaly pattern or patterns are found, in the sense of similarity, and given as the most likely automated diagnosis.

An example of anomaly event detection and anomaly pattern diagnosis is show in Figure 2. Figure 2 illustrates two anomaly patterns as a radar chart. Each segment of the chart corresponds to a diagnosis feature. The outer area is the observed anomaly event and the inner area is the closest matching labelled anomaly in the knowledgebase. The darker innermost circle is the expected value for each feature and the actual observation can of course be either above or below it.

Network anomaly detection can be a powerful tool, but it does have its own challenges. First, anomalies are, by definition, rare events and so building a comprehensive diagnosis knowledgebase is time-consuming and requires the involvement of network experts for classification and analysis of new discovered anomaly events. Second, an anomaly is not necessarily a fault, or any other relevant event in the network. Many detected anomalies may not be relevant for network operation or management, but rather just something unusual. For example, a football match may lead to an anomalous peak load, but if not leading to congestion, does not need to be notified to the operator. The analysis of irrelevant anomalies is costly and deflates the value of anomaly detection. Third, a desirable network anomaly detection system would also be able to detect unforeseen anomalies. Building a network anomaly detection system by leveraging supervised techniques, i.e., involving labelled anomaly detection training dataset is contrary to this goal, since it requires many samples of known and diverse anomalies.

Fault injection, also called anomaly injection or failure injection, is the act of purposefully disturbing the functioning of network components by introducing misconfigurations, simulating failures or other changes in the expected behaviour. Knowing the injected root cause, the network behaviour can be monitored and measured and from these measurements the faults can be fingerprinted for later detection and diagnosis. Fault injection is an alluring concept, because it enables robust supervised learning methods to be used for both anomaly detection and diagnosis. However, it has obvious downsides that limit its usability in mobile networks:
- Fault injection, is typically not feasible on operational (live) networks, where network QoS cannot be compromised.
- Fault injection, in isolated test cases (such as a single network element in a lab) do not produce the wide-reaching effects of a network element fault in a real large-scale network deployment. These isolated injections also might not produce patterns that can be used for anomaly detection and diagnosis in live deployments.
- Network simulators may be used to simulate the impact of injected faults. However, since faults are usually very specific to a certain network deployment and its environment, simulated anomaly patterns are typically not transferable to real network anomaly detection.

To mitigate the above-mentioned problems in network anomaly detection, a number of solutions have been proposed. The Network Diagnosis Cloud concept proposes to use transfer learning to transfer network anomaly event diagnosis knowledge between networks or deployments to speed up the diagnosis knowledgebase collection. Such transfers are not straightforward, though, since each network deployment is different and the same anomaly pattern and diagnosis may not be applicable in different networks. For this the Network Diagnosis Cloud introduces Gateway Diagnostic Agents (GDAs) that translate network specific diagnosis knowledge from Local Diagnostic Agents (LDAs) to the generic model in the Central Diagnostic Agent (CDA) and vice versa. Such translations are not easy to implement or always possible. Transfer between more similar networks is typically easier, but still nothing but trivial and already limiting the data available for diagnosis.

Another alternative is to use active learning to reduce the manual diagnosis effort. In this solution, the diagnosed and undiagnosed anomaly patterns in the diagnosis knowledge base are clustered to find the undiagnosed anomaly pattern samples to be diagnosed by the operator, which are the most beneficial for future automatic diagnoses. This solution can reduce the manual diagnosis effort by reducing the number of anomaly pattern samples that need to be manually diagnosed. However, in some cases it cannot determine if the raised anomaly patterns are actually relevant for the network operation or not. Furthermore, this approach may have the risk of erroneously clustering anomalies with different root causes together, which can lead to diagnosis errors.

To summarize, anomalies of a communication network are rare events and the conventional anomaly detection is time-consuming, requiring the involvement of network experts and not 100% accurate. Hence, there is a need to develop an accurate and efficient way of anomaly detection and diagnosis.

The present disclosure generally proposes in its embodiments to leverage on the novel capabilities offered by a Network Digital Twin, NDT, to enable accurate fault injection experiments. Network anomaly detection is one of the key use cases that can benefit of such experiments.

References are now made to embodiments of the disclosure as shown in the figures. In particular, it is to be noted that identical or like reference numbers used in the figures of the present disclosure may, unless indicated otherwise, indicate identical or like elements, such that repeated description thereof may be omitted for reasons of conciseness.

In order to achieve an appropriate network anomaly analysis, the use of a Network Digital Twin is proposed in the present disclosure. A Network Digital Twin is a digital representation of the hardware and software features, characteristics and configurations of a communication network and its relevant environment. It combines the network aspects in terms of software and hardware with the physical world aspects such as propagation channels, physical distance, and mobility. It has the capability to mimic some or all properties, variables, configurations as well as behaviours of a network and its environment, both static and dynamic. It has also simulation capabilities ("what-if' analysis). An NDT can be used to model network behaviours in specific situations. Using an NDT, an operator can monitor the network, detect, and troubleshoot issues in real-time, without disturbing the operation of the real network. An NDT is not necessarily a representation of the entire network as it may have smaller scope: it may be a representation of a network, subnetwork, geographical area, single cell, a group of cells, and/or selected features that are synchronized between the real network and the NDT.

Network digital twins may be of interest in maintaining in digital form, a copy of the physical environment in order to be better able to control actions in the physical environment. A digital twin may comprise a digital replica of a living or non-living physical entity. Digital twin may refer to a digital replica of physical assets (physical twin), processes, people, places, systems and devices that can be used for various purposes. The network digital twin may have a connection between the physical model and the corresponding virtual model or virtual counterpart. The connection may be established by generating real time data using or received from sensors. In one example a network digital twin is analyzed and if some data is missing an alert message may be generated. A network digital twin may learn and update itself from multiple sources of physical assets to represent its near real-time status, working condition or position. Furthermore, the connection may be arranged between the tracked objects and the digital twin.

A network digital twin may be created and maintained by software -based tools. In one aspect, for example spatial computing relies on spatial awareness; in order for a system to adapt to the surroundings, the system needs to have knowledge of these surroundings and be able to interpret them. In particular, spatial computing can be tied to the concept of a "digital twin", a virtual representation of a physical object (or environment) that serves as a real-time digital counterpart of the real-world physical object (or environment). In other words, a network digital twin of a real-world network is a computational model that stores - at a certain level of abstraction - the important features of the network or space. The digital representation of these features can then be used for computational processing of spatially aware algorithms.

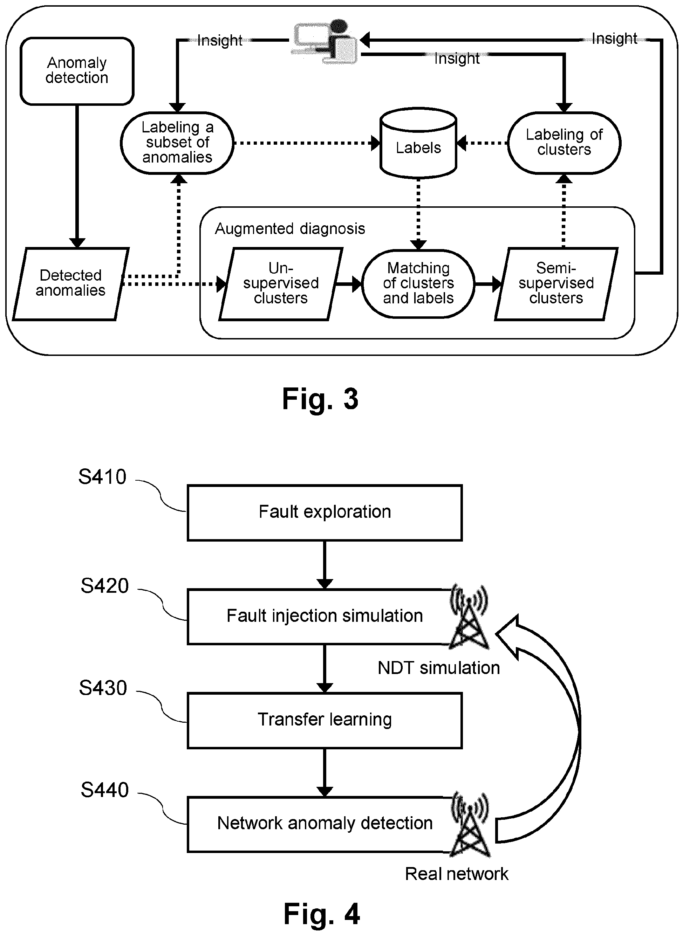

Figure 4 schematically illustrates an overview of an example implementation of network digital twin-based fault injection analysis of the present disclosure. In this implementation, there is introduced a Network Anomaly Detection Function Network Digital Twin Management Service Consumer, NADF NDT MnS Consumer, which can utilize the simulation capability of an Network Digital Twin Management Service Provider, NDT MnS Provider, to safely conduct fault injection experiments without endangering the QoS (Quality of Service) of the twinned real network. The impact of each injected fault can be monitored in the NDT simulation to build a training dataset for directly detecting and diagnosing the injected faults using supervised machine learning (AI/ML) methods.

As shown in Figure 4, in step S410, once the NDT simulation scenario is determined based on the deployment of the network anomaly detection solution in the real twinned network (target network which is a network in the real world), the next step is to determine the fault configurations or states that are to be injected into it. This may include a list of pre-determined fault scenarios, but also heuristic or random exploration of the network and simulation configuration space of the NDT simulation.

Next, in step S420, the fault situations are simulated in the NDT simulation and their simulated impact on the network behaviour and metrics are monitored. From these, a training dataset can be created for training a supervised machine learning based classification model to detect and determine the injected root cause from the observed simulated network impact. The simulation may be restarted from the same initial state for each of the injected faults. Furthermore, since NDT simulates the mobile network behaviour in relation with a specific environment, it is possible to explore and collect context-based fault signatures: for example, the same anomaly event as network congestion may be caused by high demand or reduced capacity. The machine learning based classification model may be an AI/ML model which may be trained and/or deployed for inference directly in network entities, such as base stations (e.g., gNodeBs), core network functions, management functions and/or UEs (User Equipments). For instance, a base station may have a number of different AI/ML models trained and/or deployed for inference. As a result of the simulation the anomaly signature is generated.

In step S430, since the NDT simulation is still a simulation and can never be 100% accurate with the twinned real network, an additional transfer learning step may be implemented to calibrate the results. However, since the NDT is simulating the network where the network anomaly detection solution is deployed, it is very similar to the target network and required translation is easier. Calibration may include comparing the anomaly signatures of known diagnosed cases in the real network and comparing them against the anomaly pattern/signature of the same root cause being injected in the NDT simulation.

Lastly, in step S440, the translated training dataset or anomaly detection and diagnosis classification machine learning model may be incorporated into the network anomaly detection solution in the twinned real network. This may be done offline and the same dataset may be used to train a AI/ML model to detect and diagnose network anomalies.

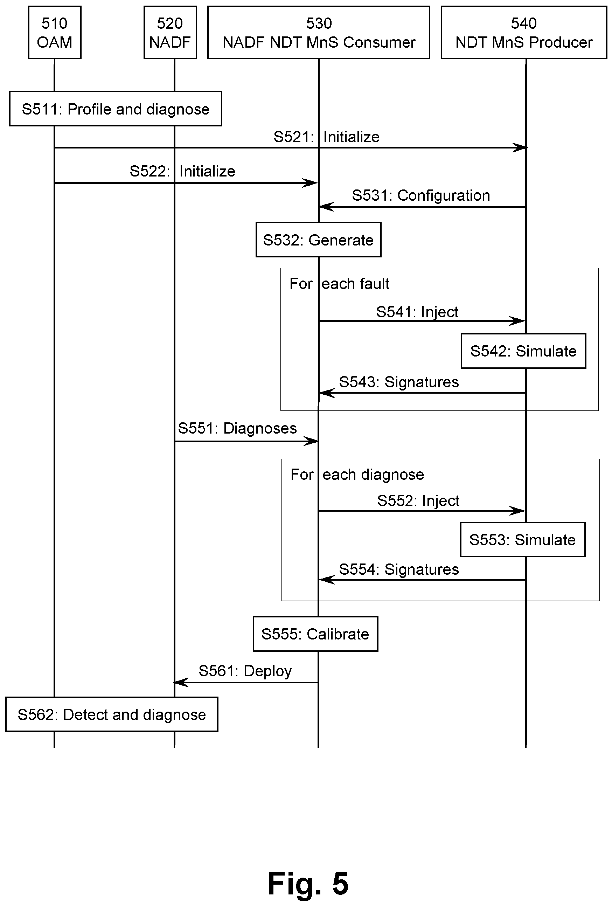

In some embodiments, as illustrated in Figure 5, as shown in step S511, a Network Anomaly Detection Function, NADF 520 is deployed and profiled using data collected by the OAM 510.

In step S521 and step S522, the OAM 510 initializes both an NDT MnS Producer 540 and an NADF NDT MnS Consumer 530 to improve the detection and diagnosis capabilities of the NADF 520.

In step S531 and step S532, the NADF NDT MnS Consumer 530 reads the simulation configuration from the NDT MnS Producer 540 and based on the configuration generates a set of fault injection cases.

In step S541 and step S542, the NADF NDT MnS Consumer 530 uses the NDT MnS Producer 540 simulation to simulate the impact of at least one injected fault and to collect their signatures. In some embodiments, NADF NDT MnS Consumer 530 uses the NDT MnS Producer simulation to simulate the impact of each injected fault and to collect their signatures.

In step S541, NADF NDT MnS Consumer 530 injects at least one anomaly. The anomaly may include a communication network fault, communication network failure and/or communication network unusual issue occurrence. The anomaly may also include a list of pre-determined fault scenarios, heuristic or random exploration of the network and simulation configuration space of the NDT simulation. As a result of the simulation the anomaly signature is obtained. Moreover, the diagnosis for the anomaly is the original anomaly configuration, which was injected in the simulation.

In step S542, the NDT MnS Producer 540 simulates the impact of at least one injected anomaly and to collect their signatures. The signatures may be patterns. In some embodiments, NADF NDT MnS Consumer 530 uses the NDT MnS Producer simulation to simulate the impact of each injected anomaly and to collect their signatures.

In step S543, the NDT MnS Producer 540 sends the collected signatures to the NADF NDT MnS Consumer 530.

Optionally, in step S551 to step S555, to calibrate the signatures provided by the NDT MnS Producer 540, the NADF NDT MnS Consumer 530 may collect diagnosed anomalies from the NADF, inject their diagnosed root cause into the NDT MnS Producer 540 simulation and compare the NADF anomaly pattern to the monitored impact in the NDT MnS Producer 530 simulation. The simulation of the injected anomaly may be calibrated to make the result more reliable. Calibration may include comparing the anomaly signatures of known diagnosed cases in the real network and comparing them against the anomaly pattern/signature of the same root cause being injected in the NDT simulation.

In step S551, the NADF NDT MnS Consumer 530 may receive diagnosed anomalies from the NADF. By receiving diagnosed anomalies from the NADF, at least one signature of corresponding at least one root cause in a real network may be obtained.

In step S552, the NADF NDT MnS Consumer 530 may inject their diagnosed root cause into the NDT MnS Producer 540 simulation.

In step S553, the NDT MnS Producer 540 simulation may simulate the injected diagnosed root cause into the NDT MnS Producer simulation, and the NDT MnS Producer 540 may obtain at least one signature of the injected diagnosed root cause.

In step S554, the NDT MnS Producer 540 may send the at least one obtained signature to the NADF NDT MnS Consumer 530.

In step S555, the NADF NDT MnS Consumer 530 may compare the signature obtained in step S551 to the signature obtained in step S553, and calibrate the signature obtained in step S543 based on the result of the comparison. The simulation of the injected anomaly may be calibrated to make the result more reliable. Calibration may include comparing the anomaly signatures of known diagnosed cases in the real network and comparing them against the anomaly pattern/signature of the same root cause being injected in the NDT simulation.

Thus, the calibration is done by comparing the anomaly patterns/signatures of known diagnosed cases in the real network and comparing them against the anomaly signature of the same root cause being injected in the NDT simulation.

Lastly, in step S561, the diagnosis knowledge generated by the NADF NDT MnS Consumer 530 is deployed in the NADF 540 for use in the real twinned network. This may be done either by transferring the training data from the NADF NDT MnS Consumer 530 and training a supervised classification machine learning model in the NADF 540, or training the model directly in the NADF NDT MnS Consumer 530 and transferring the trained model to the NADF 540. Providing the anomaly diagnosis to the target communication network may trigger one or more self-healing actions of the target communication network.

Accordingly, using the described implementation with the NDT simulation, fault injection is also feasible on operational (live) networks, without compromising network QoS.

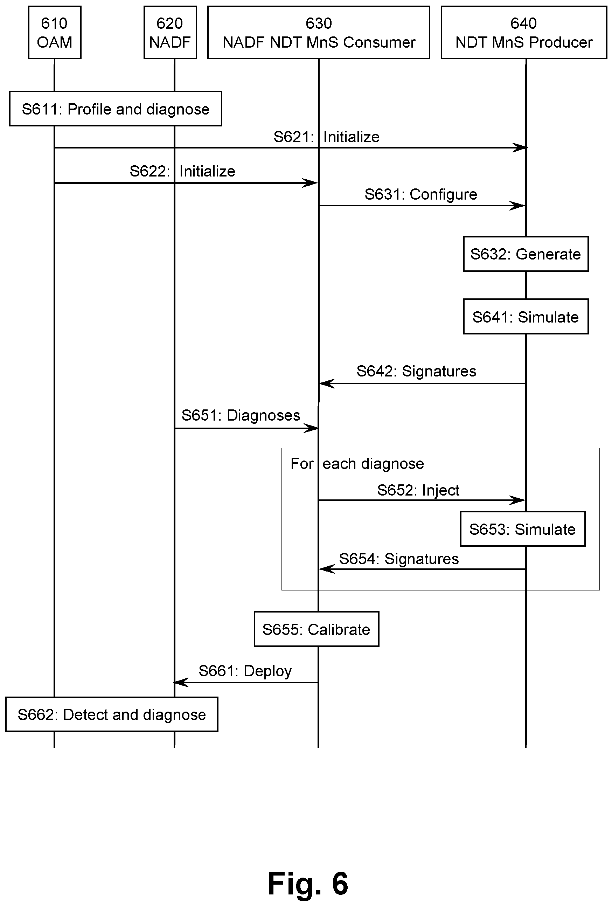

In some embodiments, as illustrated in Figure 6, the new or changed interfaces include the NADF MnS Consumer 630 interfaces to initialize it and to interact with the NDT MnS Provider 640 and the NADF 620.

As shown in step S611, a Network Anomaly Detection Function (NADF) 620 is deployed and profiled using data collected by the OAM 610.

In step S621 and step S622, the OAM 610 initializes both an NDT MnS Producer 640 and an NADF NDT MnS Consumer 630 to improve the detection and diagnosis capabilities of the NADF 620.

In step S631 and step S632, the NADF NDT MnS Consumer 630 configures the fault injection in the NDT MnS Producer 640 and the NDT MnS Producer 640 generates a set of fault scenarios accordingly. A fault may also be referred to as a type of anomaly. Anomalies may include communication network faults, communication network failures and/or communication network unusual issue occurrences. The anomaly may also include a list of pre-determined fault scenarios, heuristic or random exploration of the network and simulation configuration space of the NDT simulation.

In step S641 and step S642, the NDT MnS Producer 640 simulates the simulated fault scenarios and provides the resulting fault signatures to the NADF NDT MnS Consumer 630. Note that the signatures in this case may preferably contain both the injected fault (e.g., configuration) and the signature of its impact. In some embodiments, The NDT MnS Producer simulates each of the simulated fault scenarios and provides the resulting fault signatures to the NADF NDT MnS Consumer 630.

In step S641, the NDT MnS Producer 640 simulates the impact of at least one generated anomaly and to collect their signatures. The signatures may be one or more patterns. In some embodiments, NADF NDT MnS Consumer 630 uses the NDT MnS Producer 640 simulation to simulate the impact of each injected anomaly and to collect their signatures. The anomaly may include communication network faults, communication network failures and/or communication network unusual issue occurrences. The anomaly may also include a list of pre-determined fault scenarios, heuristic or random exploration of the network and simulation configuration space of the NDT simulation.

In step S642, The NDT MnS Producer 640 provides the resulting fault signatures to the NADF NDT MnS 630.

The step S651 to step S661 are the same as that of step S651 to step S655, wherein step S651 to step S655 are optional steps.

In yet another example implementation of the present disclosure, the NDT MnS Provider's simulation capability is utilized as a diagnosis sandbox, to analyse and diagnose already detected anomaly events (or anomalities). In this case, the simulation capability is leveraged to inject different predefined anomalities or failures, to try and recreate the anomaly pattern of selected events. The best fitting set of causes, i.e., the root causes that lead to that anomaly patterns, are proposed as the diagnosis for the anomaly events. Because the NDT simulation is run only after an anomaly event has been detected and described in an anomaly pattern, the simulated root cause hypotheses can be selected with heuristics and limited to a lower number of scenarios.

The diagnosis sandbox can be used either to diagnose previously detected anomalies as a post processing step offline, and through this diagnosis build a comprehensive diagnosis knowledgebase, which once again can be used for training detection and diagnosis models in the future. Another use for the diagnosis sandbox - if the NDT can support fast enough or parallelized analysis of hypotheses - is to diagnose currently occurring anomalies online. Both online and offline methods may also be combined, where diagnoses are simulated online only when the diagnosis knowledgebase does not have a close match, and if a good diagnosis is found it is then again stored in the knowledgebase and may be used in further diagnoses.

For example, in case of coverage issues, potential hypotheses that are tested in the NDT simulation could include:
1. Bad weather (e.g., heavy rain or snow);
2. Misconfiguration, which can be tested by simulating the action cell configuration
3. Cell power amplifier failure, which can be simulated by reducing the cell transmission power from the configured value or reducing the antenna gain.

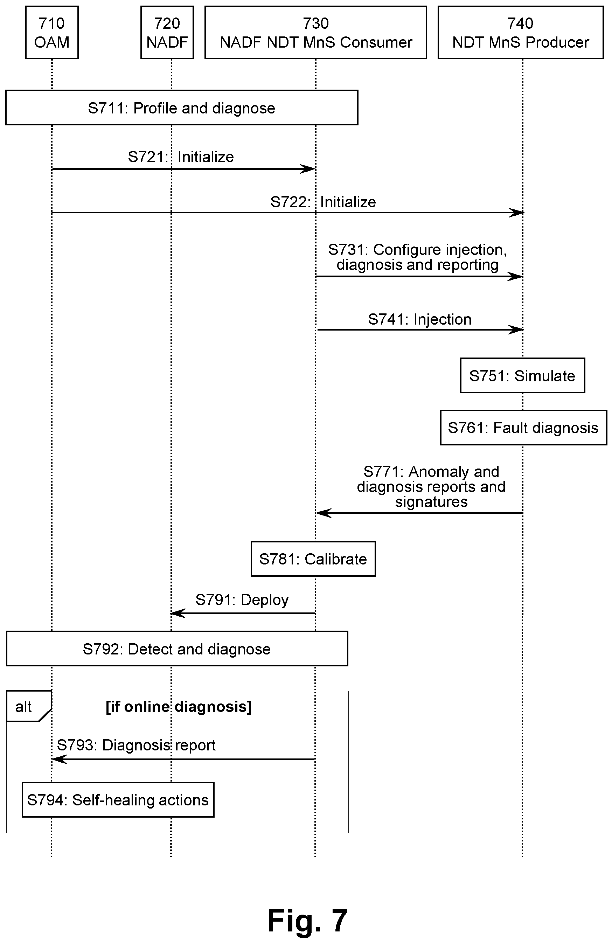

Figure 7 schematically illustrates another example implementation of network digital twin-based fault injection analysis of the present disclosure. As shown in Figure 7, anomaly detection and diagnosis are separated. Anomaly detection, which is typically easier than the diagnosis, may be implemented using prior art clustering methods and the simulation capability of NDT MnS Provider is leveraged to explore diagnosis for selected anomaly events.

As shown in step S711, a Network Anomaly Detection Function, NADF 720 is deployed and profiled using data collected by the OAM 710.

In step S721 and step S722, the OAM 710 initializes both an NDT MnS Producer 740 and an NADF NDT MnS Consumer 730 to improve diagnosis capabilities of the NADF 720.

In step S731, the NADF NDT MnS Consumer 730 configure at least one anomaly injection in the NDT MnS Producer 740. The NADF NDT MnS Consumer 730 also requests to the NDT MnS Producer to receive anomaly diagnosis specifying the expected report or report type (e.g. specific required network measurements). In this case, failures are logically preselected on the consumer side in order to recreate specific anomalous measurement set or patterns or signatures.

In step S741, the NADF NDT MnS Consumer 730 injects the at least one anomaly injection. The anomaly includes communication network fault, communication network failure and/or communication network unusual issue occurrence. The anomaly may also include a list of pre-determined fault scenarios, heuristic or random exploration of the network and simulation configuration space of the NDT simulation.

In step S751, the NDT MnS Producer 740 simulates the at least one injected anomaly.

In step S761, The NDT MnS Producer 740 is given the injected failures, explores potential root causes (the list of potential causes could be obtained from a predefined set or could be specified from the consumer to the producer during step S731) to perform fault diagnosis.

In step S771, the NDT MnS Producer 740 sends to the consumer the diagnosis performed along with the requested report containing list of measurements and patterns.

In step S781, to calibrate the diagnosis provided by the NDT MnS Producer 740, the NADF NDT MnS Consumer 730 may collect diagnosed anomalies from the NADF 720, and compare the NADF 720 anomaly pattern to the monitored impact in the NDT MnS Producer 740 simulation. Calibration may include comparing the anomaly signatures of known diagnosed cases in the real network and comparing them against the anomaly pattern/signature of the same root cause being injected in the NDT simulation.

In step S791, the diagnosis knowledge generated by the NADF NDT MnS Consumer 730 is deployed in the NADF 720 for use in the real twinned network. This may be done either by transferring the training data from the NADF NDT MnS Consumer 730 and training a supervised classification machine learning model in the NADF 720 or training the model directly in the NADF NDT MnS Consumer 730 and transferring the trained model to the NADF 720.

In step S793 and step S794, in online NDT hypothesis simulation, the diagnosis can be immediately given to the real twinned network to trigger self-healing actions and stored in the diagnosis knowledgebase for later anomaly event diagnosis. In this option, the NDT MnS Producer 740 is utilized to provide online diagnosis of ongoing fault. The NDT MnS Producer 740 may also trigger data collection from the real network (for example from cells near to the impacted ones) to further support the ongoing diagnosis.

In summary, the example embodiments as described with reference to Figures 5 to 8 may generally be seen as to propose analysis of anomalies in networks by using Network Digital Twin (NDT)-based fault injection.

To be more specific, compared to conventional techniques, there may be the following new aspects that are worth mentioning. First, the present disclosure configures a Network Digital Twin, NDT of a target communication network. A NDT is not necessarily a representation of the entire network as it may have smaller scope: it may be a representation of a network, subnetwork, geographical area, single cell, a group of cells, and/or selected features that are synchronized between the real network and the NDT. By this configuration, the simulation of different anomalies are made as accurate as possible with the twinned target communication network. Second, inject an anomaly into the NDT to obtain a signature, for example, a pattern, of the injected anomaly, in order to configure the machine to learn different anomaly signature in the NDT and to obtain a training dataset or anomaly detection and diagnosis classification machine learning model. Third, the training dataset or anomaly detection and diagnosis classification machine learning model may be deployed into the network anomaly detection solution in the twinned real network. Accordingly, using the described implementation with the NDT simulation, fault injection is also feasible on operational (live) networks, without compromising network QoS.

Alternatively or additionally, in online NDT hypothesis simulation, the diagnosis can be immediately given to the real twinned network from the NDT side, to trigger self-healing actions and stored in the diagnosis knowledgebase for later anomaly event diagnosis, or to act as a source of monitoring information for manual corrective actions. By the above configuration, simulations as accurate as possible with the twinned target network are obtained without reducing the QoS of the twinned target communication network. Optionally, the simulation of the injected anomaly may be calibrated to make the result more reliable.

It is noted that, although in the above-illustrated example embodiments (with reference to the figures), the messages communicated/exchanged between the network components/elements may appear to have specific/explicit names, depending on various implementations (e.g., the underlining technologies), these messages may have different names and/or be communicated/exchanged in different forms/formats, as can be understood and appreciated by the skilled person.

According to some example embodiments, there are also provided corresponding methods suitable to be carried out by the apparatuses (network elements/components) as described above, such as the UE, the CU, the DU, etc.

It should nevertheless be noted that the apparatus (device) features described above correspond to respective method features that may however not be explicitly described, for reasons of conciseness. The disclosure of the present document is considered to extend also to such method features. In particular, the present disclosure is understood to relate to methods of operating the devices described above, and/or to providing and/or arranging respective elements of these devices.

Further, according to some further example embodiments, there is also provided a respective apparatus (e.g., implementing the UE, the CU, the DU, etc., as described above) that comprises at least one processing circuitry, and at least one memory for storing instructions to be executed by the processing circuitry, wherein the at least one memory and the instructions are configured to, with the at least one processing circuitry, cause the respective apparatus to at least perform the respective steps as described above.

Yet in some other example embodiments, there is provided a respective apparatus (e.g., implementing the UE, the CU, the DU, etc., as described above) that comprises respective means configured to at least perform the respective steps as described above.

It is to be noted that examples of embodiments of the disclosure are applicable to various different network configurations. In other words, the examples shown in the above-described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

It should also to be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of the present disclosure.

It should further be noted that the description and drawings merely illustrate the principles of the present disclosure. Those skilled in the art will be able to implement various arrangements that, although not explicitly described or shown herein, embody the principles of the present disclosure and are included within its spirit and scope. Furthermore, all examples and embodiment outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

### List of abbreviations:

| **Abbreviation** | **Description** |
|---|---|
| CDA | Central Diagnostics Agent |
| GDA | Gateway Diagnostics Agent |
| LDA | Local Diagnostics Agent |
| MnS | Management Service |
| NADF | Network Anomaly Detection Function |
| NDT | Network Digital Twin |
| OAM | Operations, Administration and Maintenance |
| QoS | Quality of Service |
| SDO | Standards Development Organization |
| TRX | Transceiver |
| UE | User Equipment |

## Claims

1. A first network node, configured to support detection and/or diagnosis of network anomalies in a target communication network based on a Network Digital Twin, NDT, simulating at least a part of the target communication network, wherein the first network node comprises:
at least one processor; and
at least one memory storing instructions that, when executed by the at least one processor, cause the first network node at least to:
provide, to a second network node, at least one anomaly injection case generated based on a simulation configuration and/or configure at least one anomaly injection case in the NDT, the NDT being provided at the second network node;
receive, from the second network node, a simulation signature and/or anomaly diagnosis of a simulation of the anomaly injection case on the NDT; and
deploy diagnosis knowledge, generated based on the received simulation signature and/or anomaly diagnosis, in a Network Anomaly Detection Function, NADF, for the target communication network and/or provide the anomaly diagnosis to the target communication network.

2. The first network node according to claim 1, wherein the anomaly injection cases are fault injection cases indicative of network fault conditions and wherein providing an anomaly injection case to the second network node includes injecting a fault of the set of fault injection cases into the NDT to simulate the impact of said fault.

3. The first network node according to claim 1 or 2, wherein the first network node is initialized by an Operations, Administration and Maintenance, OAM, entity for improving the detection and diagnosis capabilities of the NADF, the first network node is further caused to:
inject one or more diagnosed root causes of an anomaly into the NDT to simulate the impact of said root cause, wherein a root cause is the best fitting cause leading to the anomaly signature of a selected event; and
compare diagnosed anomaly signatures of the NADF with the received simulation signatures to calibrate the received simulation signatures provided by the second network node.

4. The first network node according to claim 1, wherein the anomaly injection cases are fault injection cases indicative of network fault conditions and wherein providing at least one anomaly injection case includes injecting a fault of the set of fault injection cases into the NDT to simulate the impact of said fault, and the first network node is further caused to:
obtain a first simulation signature for each of the at least one anomaly injection case;
obtain a first signature of a root cause for each of the at least one diagnosed root cause of an anomaly in the target communication network;
inject at least one diagnosed root cause of an anomaly into the NDT to simulate the impact of said root cause, and obtain a second simulation signature for each of the at least one diagnosed root cause of an anomaly;
compare the first signature of the root cause and the second simulation signature to calibrate the first simulation signature provided by the second network node.

5. The first network node according to claim 1, wherein the anomaly injection cases are fault injection cases indicative of network fault conditions and wherein after configuring at least one anomaly injection case in the NDT provided at the second network node, the first network node is further caused to:
obtain a first simulation signature for each of the at least one anomaly injection case;
obtain a first signature of a root cause for each of the at least one diagnosed root cause of an anomaly in the target communication network;
inject at least one diagnosed root cause of an anomaly into the NDT to simulate the impact of said root cause, and obtain a second simulation signature for each of the at least one diagnosed root cause of an anomaly;
obtain a third simulation signature for each of the at least one diagnosed root cause of an anomaly in the target communication network.
compare the first signature of the root cause and the second simulation signature to calibrate the first simulation signature provided by the second network node.

6. The first network node according to any of the preceding claims, wherein deploying the diagnosis knowledge includes deploying the received simulation signature of each of the at least one anomaly injection case in the NADF for use in the target communication network.

7. A second network node, configured to support detection and/or diagnosis of network anomalies in a target communication network based on a Network Digital Twin, NDT, simulating at least a part of the target communication network, wherein the second network node comprises:
at least one processor; and
at least one memory storing instructions that, when executed by the at least one processor, cause the first network node at least to:
provide a configuration for generating an anomaly injection case to the first network node and/or receive, from a first network node, at least one anomaly injection case generated based on a simulation configuration; and
simulate the impact of an injected anomaly of the set of anomaly injection cases on the NDT; and
report to the first network node, a simulation signature and/or anomaly diagnosis of the simulation of the anomaly injection case on the NDT.

8. The second network node according to claim 7, wherein the anomaly injection cases are fault injection cases indicative of network fault conditions and wherein the first and/or second network node is caused to inject a fault of the set of fault injection cases into the NDT to simulate the impact of said fault, the NDT being provided at the second network node.

9. The second network node according to claim 7 or 8, wherein the second network node is further caused to:
receive one or more diagnosed root causes of an anomaly and simulate the impact of said one or more root causes on the NDT, wherein a root cause is the best fitting cause leading to the anomaly signature of a selected event; and
report at least the simulated signature indicative of the impact of said root cause to the first network node for calibration.

10. The second network node according to at least one claims 7 to 9, wherein the anomaly injection cases are fault injection cases indicative of network fault conditions and the second network node is further caused to:
based on a fault of the at least one anomaly injection case injected by the first or second network node, simulate the impact of said fault on the NDT to obtain a first simulation signature;
based on at least one diagnosed root cause of an anomaly, simulate the impact of said at least one root cause on the NDT, to obtain a second simulation signature; and
report the first simulation signature and the second simulation signature to the first network node for calibration.

11. The second network node according to claim 7, wherein the second network node is configured to simulate the injected failures and provide a diagnosis of potential root causes to perform fault diagnosis, wherein the fault diagnosis is provided for a past fault or an ongoing fault, wherein the second network node is further configured to trigger data collection from the target network to support the ongoing diagnosis.

12. The second network node according to at least one of claims 7 to 9, the second network node is further caused to:
provide a simulation configuration to the first network node, based on which the first network node generates the set of fault injection cases.

13. A method for supporting detection and/or diagnosis of network anomalies in a target communication network based on a Network Digital Twin, NDT, simulating at least a part of the target communication network, wherein the method comprises:
providing, to a second network node, at least one anomaly injection case generated based on a simulation configuration and/or configuring at least one anomaly injection case in the NDT, the NDT being provided at the second network node;
receiving, from the second network node, a simulation signature and/or anomaly diagnosis of a simulation of the anomaly injection case on the NDT; and
deploying diagnosis knowledge, generated based on the received simulation signature and/or anomaly diagnosis, in a Network Anomaly Detection Function, NADF, for the target communication network and/or providing the anomaly diagnosis to the target communication network to trigger one or more self-healing actions of the target communication network.

14. A method for supporting detection and/or diagnosis of network anomalies in a target communication network based on a Network Digital Twin, NDT, simulating at least a part of the target communication network, wherein the method comprises:
providing a configuration for generating an anomaly injection case to a first network node and/or receiving, from a first network node, at least one anomaly injection case generated based on a simulation configuration; and
simulating the impact of an injected anomaly of the set of anomaly injection cases on the NDT; and
reporting to the first network node, a simulation signature and/or anomaly diagnosis of the simulation of the anomaly injection case on the NDT.

15. A computer readable medium storing instructions thereon, the instructions, when executed by at least one processing unit of a machine, causing the machine to perform the method according to claim 13 or 14.
